(19)

Europäisches Patentamt

European Patent Office

Office européen des brevets

(11) **EP 2 762 828 A1**

(12) **EUROPEAN PATENT APPLICATION**

(43) Date of publication:
06.08.2014 Bulletin 2014/32

(51) Int Cl.:
*G01B 11/06* (2006.01)

(21) Application number: 14000402.9

(22) Date of filing: 04.02.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.02.2013 JP 2013020828**

(71) Applicant: **Canon Kabushiki Kaisha Tokyo (JP)**

(72) Inventors:
• **Yamazaki, Tsuyoshi**
  **Tokyo (JP)**
• **Yuki, Hiroyuki**
  **Tokyo (JP)**

(74) Representative: **Weser, Wolfgang et al**
  **Weser & Kollegen**
  **Patentanwälte**
  **Radeckestrasse 43**
  **81245 München (DE)**

(54) **Measurement apparatus and method of manufacturing article**

(57) The present invention provides a measurement apparatus which measures a position of a surface to be measured, comprising a light detection unit (16) configured to detect light reflected by the surface to be measured, a confocal optical system (10) configured to irradiate the surface to be measured with light and guide the light traveling from the surface to be measured to the light detection unit, and a control unit (18) configured to determine a position of the surface to be measured, based on an output from the light detection unit, wherein the control unit obtains a plurality of signals to be used for determining the position of the surface to be measured, selects one of the plurality of signals, and obtains the position of the surface to be measured, based on the selected signal.

FIG. 1

EP 2 762 828 A1

**Description**

BACKGROUND OF THE INVENTION

Field of the Invention

The present invention relates to a measurement apparatus and a method of manufacturing an article.

Description of the Related Art

A measurement apparatus using a confocal optical system has been proposed as a measurement apparatus which measures the shape of a surface to be measured in a noncontact manner. The confocal optical system has a pinhole at a position having a conjugated relation with the focus position of light. Light reflected by a surface to be measured is incident on a light detection unit via the pinhole. Reflected light obtained when the focus position coincides with the position of a surface to be measured can pass through the pinhole, and reflected light obtained when the focus position does not coincide cannot pass through the pinhole. The measurement apparatus using the confocal optical system detects reflected light having passed through the pinhole by using the light detection unit, determines the position of the surface to be measured in accordance with an output obtained from the light detection unit, and thus can measure the shape of the surface to be measured at high accuracy.

For such a measurement apparatus, there are two methods: a confocal method disclosed in Japanese Patent No. 3509088 and a chromatic confocal method disclosed in Japanese Patent Laid-Open No. 2009-122105. The confocal method uses single-wavelength light, and can determine the position of a surface to be measured by relatively moving the position of the surface to be measured along the optical axis of the confocal optical system, and acquiring the position of the surface to be measured when the surface to be measured is arranged at the focus position of the light. To the contrary, the chromatic confocal method uses beams having different wavelengths. In this method, the focus positions of beams of the respective wavelengths are different along the optical axis via an objective lens having axial chromatic aberration. The position of a surface to be measured can be determined by acquiring, by a light detection unit (spectrometer), a wavelength at which the focus position coincides with the surface to be measured.

In a measurement apparatus using the confocal optical system, an output from the light detection unit sometimes contains, in accordance with the shape of a measurement portion on a surface to be measured, a plurality of signals as candidates of information to be used for determining the position of the surface to be measured. For example, when a measurement portion on the surface to be measured has a spherical shape or almost spherical shape, not only reflected light obtained when the focus position coincides with the position of the surface to be measured, but also reflected light obtained when the focus position coincides with the center of curvature at the measurement portion pass through the pinhole and are incident on the light detection unit. In this case, an output from the light detection unit contains two signals. When an output from the light detection unit contains a plurality of signals, it is not known which signal is used to determine the position of the surface to be measured.

SUMMARY OF THE INVENTION

The present invention provides a technique advantageous for measuring the shape of a surface to be measured in a measurement apparatus using a confocal optical system.

The present invention in its first aspect provides a measurement apparatus as specified in claims 1 to 15.

The present invention in its second aspect provides a method of manufacturing an article as specified in claim 16.

Further features of the present invention will become apparent from the following description of exemplary embodiments with reference to the attached drawings.

BRIEF DESCRIPTION OF THE DRAWINGS

Fig. 1 is a view showing a measurement apparatus according to the first embodiment of the present invention;
Fig. 2 is a graph showing the focal length with respect to each wavelength of light;
Fig. 3A is a view for explaining a case in which an output from a light detection unit contains a plurality of signals;
Fig. 3B is a view for explaining a case in which an output from the light detection unit contains a plurality of signals;
Fig. 4 is a flowchart showing a method of selecting one of a plurality of signals in the measurement apparatus according to the first embodiment;
Fig. 5 is a view showing the path of reflected light and an output from the light detection unit in the measurement apparatus according to the first embodiment;

Fig. 6 is a view showing the path of reflected light and an output from the light detection unit in the measurement apparatus according to the first embodiment;

Fig. 7 is a view showing a measurement apparatus according to the second embodiment of the present invention;

Fig. 8 is a flowchart showing a method of selecting one of a plurality of signals in the measurement apparatus according to the second embodiment;

Fig. 9A is a view showing the path of reflected light and an output from a light detection unit in the measurement apparatus according to the second embodiment;

Fig. 9B is a view showing the path of reflected light and an output from the light detection unit in the measurement apparatus according to the second embodiment;

Fig. 10 is a flowchart showing a method of selecting one of a plurality of signals in the measurement apparatus according to the third embodiment;

Fig. 11A is a view showing a state in which each measurement portion on a surface to be measured is measured while changing the relative positions between a confocal optical system and the surface to be measured;

Fig. 11B is a view showing a signal contained in an output from a light detection unit at each measurement portion; and

Fig. 11C is a view showing a signal contained in an output from the light detection unit at each measurement portion.

DESCRIPTION OF THE EMBODIMENTS

Exemplary embodiments of the present invention will be described below with reference to the accompanying drawings. Note that the same reference numerals denote the same members throughout the drawings, and a repetitive description thereof will not be given. The following embodiments will describe a measurement apparatus using the chromatic confocal method, but the present invention is not limited to this and is applicable to even a measurement apparatus using the confocal method. Even when the present invention is applied to the measurement apparatus using the confocal method, the same effects as those of the measurement apparatus using the chromatic confocal method can be obtained.

<First Embodiment>

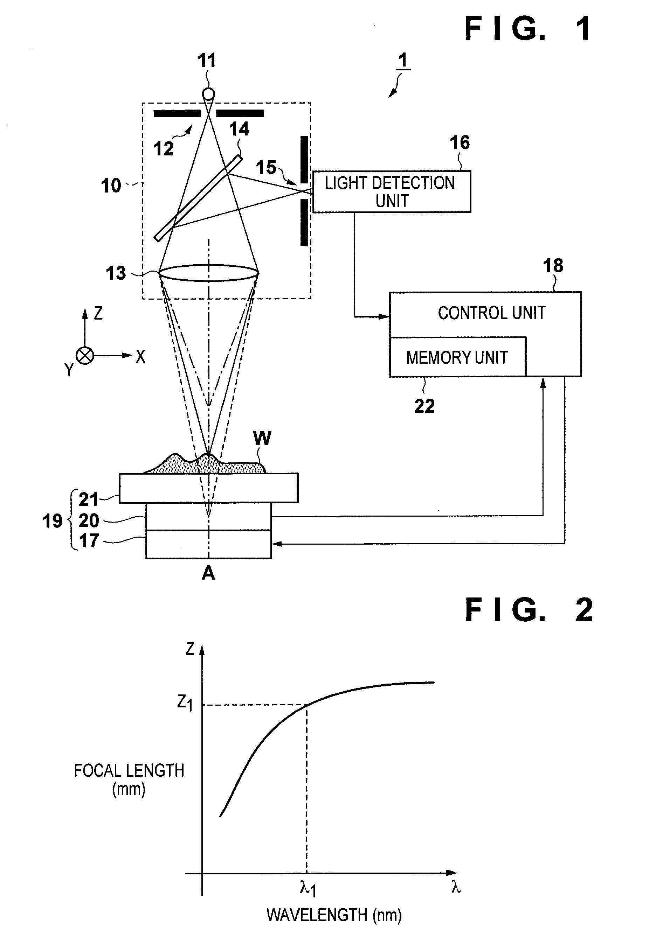

A measurement apparatus 1 according to the first embodiment of the present invention will be described with reference to Fig. 1. Fig. 1 is a view showing the measurement apparatus 1 according to the first embodiment. The measurement apparatus 1 according to the first embodiment is a measurement apparatus which measures the shape of a surface to be measured by using the confocal method. The measurement apparatus 1 includes a light source 11, confocal optical system 10, light detection unit 16, stage unit 19, and control unit 18. The control unit 18 includes a processor which performs arithmetic processing, and a memory unit 22. The measurement apparatus 1 can measure the shape of a surface to be measured by receiving, by the light detection unit 16 via a pinhole 15 included in the confocal optical system 10, light reflected by the surface (surface to be measured) of an object W to be measured, and detecting the light intensity of the reflected light by the light detection unit 16. In the first embodiment, the stage unit 19 functions as a changing unit which changes the state of the confocal optical system 10 to change an output from the light detection unit 16.

The light source 11 emits light containing different wavelengths. The light source 11 may be constructed by, for example, a halogen lamp, white LED, or SLD (Super Luminescent Diode), or may be configured to emit a plurality of laser beams having different wavelengths. The light emitted by the light source 11 is incident on the confocal optical system 10. The confocal optical system 10 is configured to include a pinhole 12, the pinhole 15, a half mirror 14, and an objective lens 13. The confocal optical system 10 forms an image on the light detection unit 16 based on the light traveling from the surface to be measured. After the light incident on the confocal optical system 10 from the light source 11 passes through the pinhole 12, it passes through the half mirror 14 and then is incident on the objective lens 13. The objective lens 13 is a refractive lens having axial chromatic aberration along the optical axis. The light having passed through the objective lens 13 is condensed at a focus position corresponding to the wavelength along an optical axis A indicated by a chain double-dashed line in Fig. 1, and irradiates the surface to be measured. Although the refractive lens is used as the objective lens 13 having axial chromatic aberration in the first embodiment, a diffraction optical element or the like is also applicable instead of the refractive lens. The focal length (distance between the focus position of light and the objective lens) of light when light containing different wavelengths passes through the objective lens 13 will be explained. Fig. 2 is a graph showing the focal length with respect to each wavelength of light. As shown in Fig. 2, the focal length tends to become longer as the wavelength of light becomes longer, and shorter as the wavelength of light becomes shorter. The reason of this tendency is that the relationship between the change amount $\delta n$ of the refractive index and the change amount $\delta F$ of the focal length can be approximated by equation (1):

$$\delta F = -\frac{\delta n}{(n-1)} F \qquad\qquad \ldots (1)$$

where n is the refractive index of the objective lens 13, and F is the focal length. The change amount $\delta n$ of the refractive index and the change amount $\delta F$ of the focal length have a relationship in which they have opposite signs (positive and negative), as represented by equation (1). In general, the refractive index tends to become smaller as the wavelength becomes longer (the refractive index tends to become longer as the wavelength becomes shorter). From this, the relationship between the wavelength and the focal length exhibits the tendency as shown in Fig. 2.

Light reflected by the surface to be measured passes again through the objective lens 13, is reflected by the half mirror 14, then passes through the pinhole 15, and is incident on the light detection unit 16. The pinhole 15 is arranged at a position having a conjugated relation to the focus position of each wavelength. Reflected light having a wavelength at which the focus position coincides with the position of the surface to be measured can pass through the pinhole 15, whereas reflected light having another wavelength cannot pass. Thus, reflected light having passed through the pinhole 15, that is, reflected light having a wavelength at which the focus position coincides with the position of the surface to be measured is incident on the light detection unit 16. The light detection unit 16 can include a spectrometer which separates reflected light, and a photoreceiver which receives the light separated by the spectrometer. The reflected light incident on the light detection unit 16 is separated for the respective wavelengths by the spectrometer, and the separated beams form images at different positions on the photoreceiver. The photoreceiver outputs the relationship between the wavelength of each beam separated by the spectrometer and the light intensity. As described above, reflected light having a wavelength at which the focus position coincides with the position of the surface to be measured passes through the pinhole 15 and is incident on the light detection unit 16. An output from the light detection unit 16 (photoreceiver) therefore contains a signal (peak of the light intensity) representing the relationship between the wavelength and light intensity of the reflected light having passed through the pinhole 15 (light incident on the light detection unit 16). This signal serves as information to be used for determining the position of the surface to be measured in the control unit 18 (to be described later).

The stage unit 19 can include a stage 21, stage position detection unit 20, and stage driving unit 17. The stage 21 is configured so that it holds an object W to be measured having a surface to be measured and can move in the X and Y directions. The stage position detection unit 20 is constructed by, for example, an encoder and detects the position (X and Y positions) of the stage 21. The stage driving unit 17 is constructed by, for example, a piezoelectric actuator using PZT (lead zirconate titanate)or stepping motor. The stage driving unit 17 drives the stage 21 in the X and Y directions. The control unit 18 controls the stage unit 19 and light detection unit 16, and determines the position of the surface to be measured, based on an output from the light detection unit 16 (photoreceiver).

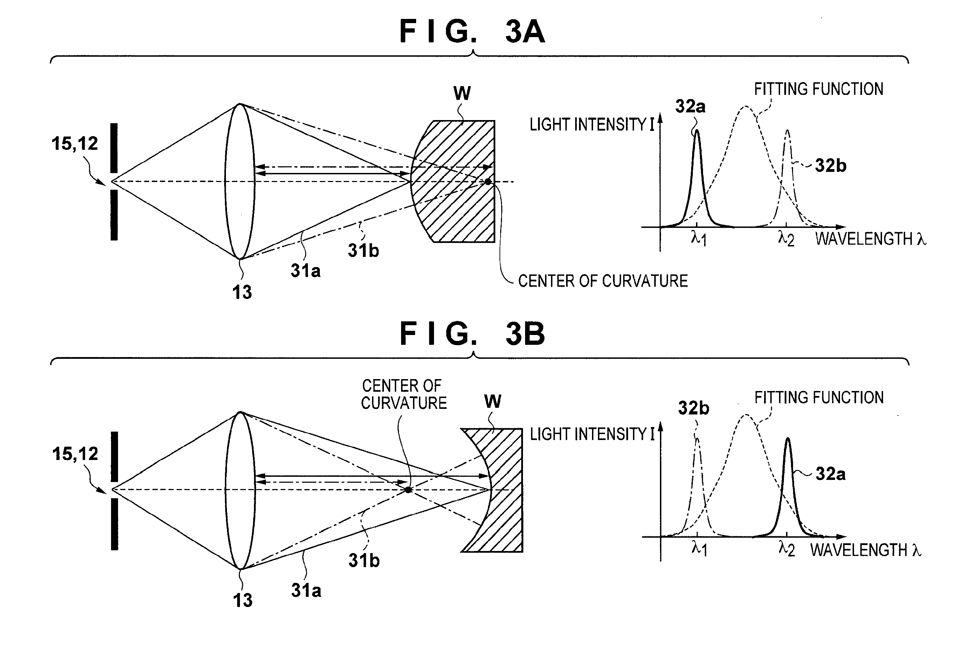

In the measurement apparatus 1 using the confocal optical system 10, reflected light having a wavelength at which the focus position coincides with the position of a surface to be measured passes through the pinhole 15 and is incident on the light detection unit 16, as described above. For this reason, the light detection unit 16 often outputs one signal. However, for example, when a measurement portion on a surface to be measured has a spherical shape or almost spherical shape, an output from the light detection unit 16 sometimes contains, in accordance with the shape of the measurement portion on the surface to be measured, a plurality of signals as candidates of information to be used for determining the position of the surface to be measured. A case in which an output from the light detection unit 16 contains a plurality of signals will be explained with reference to Figs. 3A and 3B. In Figs. 3A and 3B, the pinholes 12 and 15 are explained to be identical for descriptive convenience.

Beams which have been emitted by the light source 11 and have different wavelengths are condensed at different positions on the optical axis A for the respective wavelengths owing to axial chromatic aberration in the objective lens 13. When a measurement portion on a surface to be measured does not have a spherical shape, only reflected light (to be referred to as first reflected light hereinafter) having a wavelength at which the focus position coincides with the position of the surface to be measured passes through the pinhole 15 and is incident on the light detection unit 16. In this case, since an output from the light detection unit 16 contains one signal, the control unit 18 can determine the position of the surface to be measured, based on one signal in the output from the light detection unit 16. In contrast, when a measurement portion on a surface to be measured has, for example, a spherical shape, even reflected light (to be referred to as second reflected light 31b hereinafter) having a wavelength at which the focus position coincides with the center of curvature at the measurement portion also passes through the pinhole 15, in addition to first reflected light 31a (left views of Figs. 3A and 3B). This is because light of a wavelength that passes through the objective lens 13 and is condensed at the center of curvature is perpendicularly incident on the surface to be measured. When light is perpendicularly incident on the surface to be measured, the light reflected by the surface to be measured returns through the same optical path as that of light incident on the surface to be measured. Thus, the reflected light is condensed at the position where the pinhole 15 is arranged, and passes through the pinhole 15. As a result, not only the first reflected light 31a but also the second reflected light 31b is incident on the light detection unit 16, and an output from the light detection unit 16 contains two signals corresponding to these reflected light beams, as shown in the right views of Figs. 3A and 3B. In the right views of Figs. 3A and 3B, a signal indicated by a solid line is a signal 32a corresponding to the first reflected light 31a, and a signal indicated by a chain line is a signal 32b corresponding to the second reflected light 31b. In the right views of Figs. 3A and 3B, broken lines represent the results of performing fitting by using the signal 32a corresponding to the first reflected light 31a and the signal 32b corresponding to the second reflected light 31b.

As shown in Figs. 3A and 3B, when two signals are output from the light detection unit 16, the control unit 18 selects, from these two signals, one signal corresponding to the first reflected light as information to be used for determining the position of the surface to be measured, and determines the position of the surface to be measured, based on the selected signal. As a method of selecting one of two signals as a signal corresponding to the first reflected light, for example, there are a method of setting a threshold and selecting a signal having a light intensity equal to or higher than the threshold, and a method of selecting one signal in accordance with the relationship in wavelength between two signals. In the former method, however, it is difficult to set a threshold and select one of two signals as a signal corresponding to the first reflected light because two signals detected by the light detection unit 16 have almost the same light intensity. In the latter method, the relationship in wavelength between the first reflected light and the second reflected light changes depending on which of a convex shape and concave shape the measurement portion has. When it is not known which of a convex shape and concave shape the measurement portion has, it is difficult to select one of two signals as a signal corresponding to the first reflected light. For example, when the measurement portion on the surface to be measured has a convex shape, the signal 32a corresponding to the first reflected light 31a is detected on the short-wavelength side than the signal 32b corresponding to the second reflected light 31b, as shown in the right view of Fig. 3A. When the measurement portion has a concave shape, the signal 32a corresponding to the first reflected light 31a is detected on the long-wavelength side than the signal 32b corresponding to the second reflected light 31b, as shown in the right view of Fig. 3B.

In this fashion, when an output from the light detection unit 16 contains a plurality of signals in the measurement apparatus 1 including the confocal optical system, it is difficult to select one of these signals as a signal corresponding to the first reflected light by these two methods. If a signal selected from the plurality of signals is not a signal corresponding to the first reflected light, a measurement error may be generated in the position of the surface to be measured that is determined by the control unit 18. When obtaining the center wavelength of a signal detected by the light detection unit 16, fitting is performed based on a signal having a light intensity equal to or higher than the threshold, and the center wavelength of the signal is obtained at the sub-pixel level of the photoreceiver. Therefore, when an output from the light detection unit 16 contains a plurality of signals and fitting is performed without selecting one of these signals, fitting is executed using all the signals, as indicated by broken lines in the right views of Figs. 3A and 3B, and a measurement error may be generated. To prevent this, the measurement apparatus 1 according to the first embodiment includes the changing unit which changes the state of the confocal optical system. When an output from the light detection unit 16 contains a plurality of signals, the changing unit changes the state of the confocal optical system, and selects one of these signals as a signal corresponding to the first reflected light based on the change ratio (change amount) of the light intensity of each signal upon the change. The measurement apparatus 1 according to the first embodiment uses the stage unit 19 as the changing unit. The stage unit 19 shifts the relative positions between the confocal optical system and surface to be measured in a direction (for example, X and Y directions) different from the optical axis of the confocal optical system, thereby changing the light intensity of each signal contained in an output from the light detection unit 16.

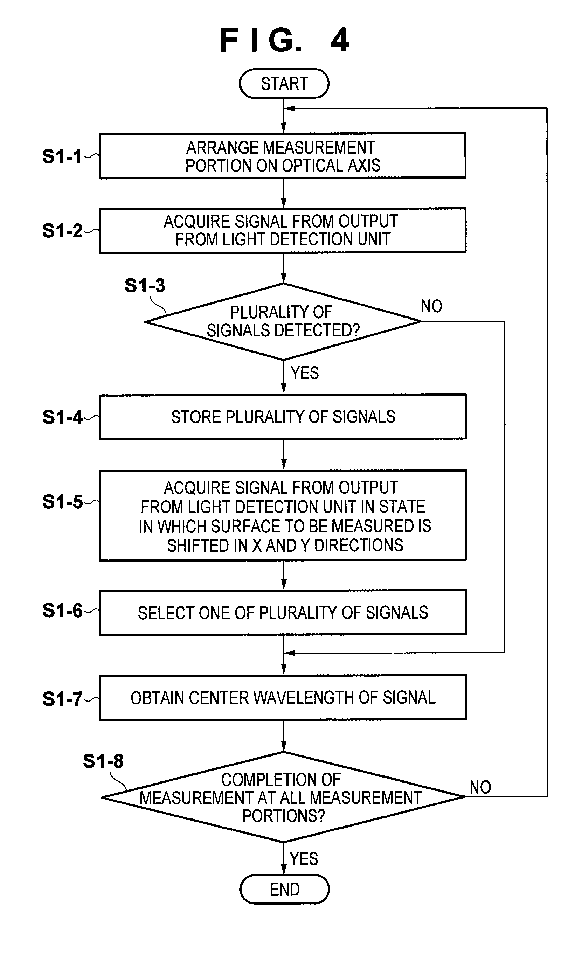

A method of selecting one of a plurality of signals as a signal corresponding to the first reflected light when an output from the light detection unit 16 contains a plurality of signals will be explained with reference to Fig. 4. Fig. 4 is a flowchart showing a method of selecting one of a plurality of signals in the measurement apparatus 1 according to the first embodiment. In step S1-1, the control unit 18 controls the position of the stage 21 so that a measurement portion on a surface to be measured is arranged on the optical axis A. For example, the control unit 18 acquires, from the stage position detection unit 20, a position signal indicating the current position of the stage 21, and controls the stage driving unit 17 based on the position signal so that the measurement portion on the surface to be measured is arranged on the optical axis A. In step S1-2, the control unit 18 controls the light detection unit 16 to output the relationship between the wavelength and light intensity of the reflected light, and acquires a signal from the output from the light detection unit 16. In step S1-3, the control unit 18 determines whether the output from the light detection unit 16 contains a plurality of signals. If the output from the light detection unit 16 contains a plurality of signals, the process advances to step S1-4; if the output does not contain a plurality of signals, to step S1-7.

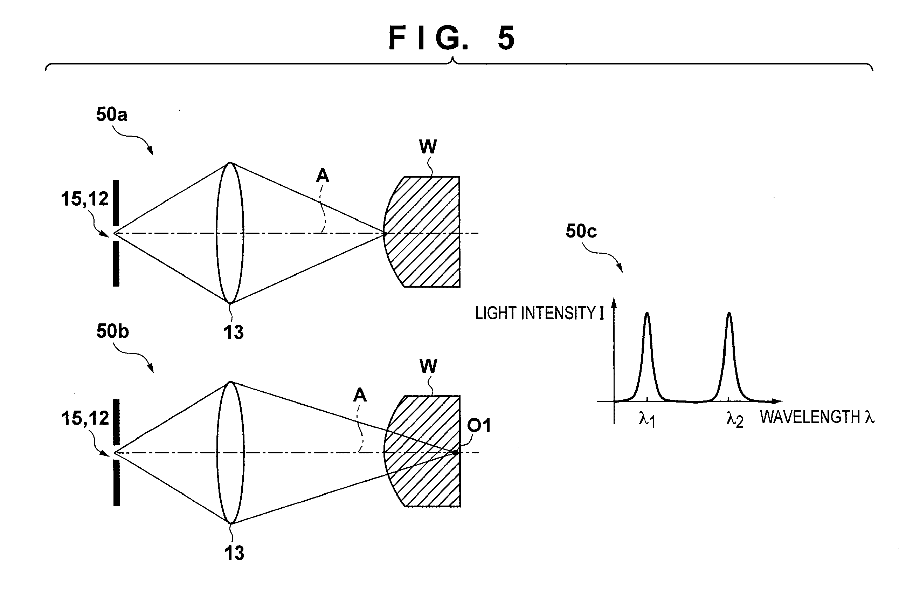

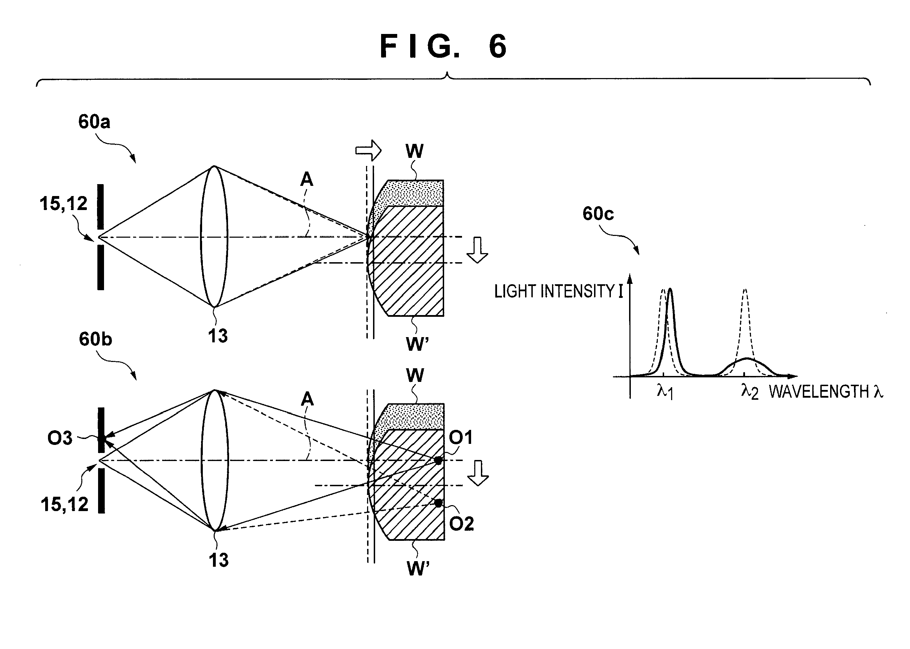

In step S1-4, the control unit 18 stores, in the memory unit 22 of the control unit 18, a plurality of signals contained in the output from the light detection unit 16. Each signal stored in the memory unit 22 will be called a stored signal. In step S1-5, the control unit 18 controls the stage driving unit 17 to shift the surface to be measured in a direction (X and Y directions) perpendicular to the optical axis A. Also, the control unit 18 controls the light detection unit 16 to output the relationship between the wavelength and light intensity of the reflected light. Then, the control unit 18 acquires a signal from the output from the light detection unit 16. Each signal contained in an output from the light detection unit 16 that is acquired in the state in which the surface to be measured is shifted in the X and Y directions will be called an acquired signal. In step S1-6, the control unit 18 compares the stored signal with the acquired signal and selects, as a signal corresponding to the first reflected light, one of a plurality of signals contained in the output from the light detection unit 16. A method of selecting one of a plurality of signals contained in an output from the light detection unit 16 by using the stored signal and acquired signal will be described with reference to Figs. 5 and 6.

Fig. 5 is a view showing the path of reflected light before shifting the surface to be measured in the X and Y directions, and an output from the light detection unit 16 at this time. In Fig. 5, 50a is a view showing the path of the first reflected light. The first reflected light is light reflected by the surface to be measured when the focus position coincides with the position of the surface to be measured. The first reflected light is condensed to the pinhole 15 via the objective lens 13, and passes through the pinhole 15. In Fig. 5, 50b is a view showing the path of the second reflected light. The second reflected light is light reflected by the surface to be measured when the focus position coincides with the center O1 of curvature at the measurement portion. The second reflected light is condensed to the pinhole 15 via the objective lens 13, and passes through the pinhole 15. Since both the first reflected light and second reflected light having passed through the pinhole 15 are incident on the light detection unit 16, an output from the light detection unit 16 contains two signals having almost the same light intensity at the positions of wavelengths $\lambda_1$ and $\lambda_2$, as shown in 50c of Fig. 5. However, when the output from the light detection unit 16 contains two signals having almost the same light intensity, it is not known which signal is a signal corresponding to the first reflected light. Each signal shown in 50c of Fig. 5 is stored as a stored signal in the memory unit 22 in step S1-4, as described above.

Fig. 6 is a view showing the path of reflected light in the state in which the surface to be measured is shifted in the X and Y directions, and an output from the light detection unit 16 at this time. In Fig. 6, 60a is a view showing the path of the first reflected light. In Fig. 6, 60b is a view showing the path of the second reflected light. In Fig. 6, 60a and 60b show an object W to be measured before movement (before shifting the surface to be measured), and an object W' to be measured after movement (state in which the surface to be measured is shifted) for comparison. Each broken line indicates even the path of reflected light before shifting the surface to be measured (corresponding to step S1-4). Even when the surface to be measured is shifted in the X and Y directions, the first reflected light is condensed to the pinhole 15 via the objective lens 13 and passes through the pinhole 15, similar to the first reflected light before shifting the surface to be measured (50a in Fig. 5), though the wavelength shifts along with a shift of the focus position in the -Z direction. Therefore, even when the surface to be measured is shifted in the X and Y directions, the light intensity of the first reflected light hardly changes, compared to the stored signal. However, if the center of curvature moves from O1 to 02 along with the movement of the surface to be measured, light is not perpendicularly incident anymore on the surface to be measured, and the second reflected light is not condensed to the pinhole 15. This is because, assuming that the second reflected light is light emitted from the center of curvature, light emitted from the center O1 of curvature on the optical axis A is condensed to the pinhole 15, but light emitted from the center 02 of curvature off the optical axis A is condensed outside (for example, a portion 03) the pinhole 15. Thus, when the surface to be measured is moved in the X and Y directions, the light intensity of the second reflected light greatly attenuates, compared to the stored signal. Here, each signal shown in 60c of Fig. 6 will be called an acquired signal, as described above.

In this way, the first reflected light and second reflected light have different change ratios (change amounts) of the light intensity when the surface to be measured is shifted in the X and Y directions. The change ratio of the first reflected light is lower than that of the second reflected light. Even when two signals having almost the same light intensity are obtained at the positions of the wavelengths $\lambda_1$ and $\lambda_2$, as shown in 50c of Fig. 5, a signal having a lower change ratio upon shifting the surface to be measured can be selected from these two signals as a signal corresponding to the first reflected light. For example, a signal at the position of the wavelength $\lambda_1$ out of the two signals in 50c of Fig. 5 has a lower change ratio of the light intensity, as shown in 60c of Fig. 6, so this signal is selected as a signal corresponding to the first reflected light. The signal (signal at the position of the wavelength $\lambda_1$) selected as a signal corresponding to the first reflected light is on the short-wavelength side among the two signals. This reveals that the measurement portion on the surface to be measured has a convex shape (convex spherical shape). The change ratio $\Delta I$ of the light intensity is given by, for example, equation (2) :

$$\text{change ratio } \Delta I \text{ of light intensity} = \left| \frac{(\text{light intensity of acquired signal}) - (\text{light intensity of stored signal})}{(\text{light intensity of stored signal})} \right| \quad \ldots (2)$$

By using equation (2), the control unit 18 calculates the change ratio of the light intensity for the signal at the position of the wavelength $\lambda_1$ and the signal at the position of the wavelength $\lambda_2$.

In some cases, the light intensity of either of the two signals does not change even if the surface to be measured is shifted in the X and Y directions. In this case, the surface to be measured is shifted again in a direction perpendicular to the direction in which the light intensity did not change, and then steps S1-5 and S1-6 are performed. Accordingly, one of the two signals can be selected as a signal corresponding to the first reflected light. A case in which the light intensity of either of two signals does not change even upon shifting a surface to be measured in the X and Y directions is assumed to be a case in which, for example, the surface shape of a cylindrical lens is measured. When measuring a portion of the cylindrical lens on the generatrix, the light detection unit 16 detects a plurality of signals, and the light intensity of each signal does not change even upon moving the cylindrical lens in the generatrix direction. At this time, the cylindrical lens is shifted in a direction perpendicular to the generatrix direction, and steps S1-5 and S1-6 are performed. As a result, one of a plurality of signals can be selected as a signal corresponding to the first reflected light.

In step S1-7, the control unit 18 obtains the center wavelength of the signal selected in step S1-6. Since the wavelength and focus position are associated with each other in advance, the position of the measurement portion on the surface to be measured can be determined by obtaining the center wavelength of one signal selected from the plurality of signals. In step S1-8, the control unit 18 determines whether measurement has been performed at all measurement portions on the surface to be measured. If measurement has been performed at all measurement portions, the measurement ends; if measurement has not been performed at all measurement portions, the process returns to step S1-1. If measurement has ended at all measurement portions, the shape of the surface to be measured can be obtained based on the position of each measurement portion.

As described above, in the measurement apparatus 1 according to the first embodiment, when an output from the light detection unit 16 contains a plurality of signals, the light detection unit 16 acquires a plurality of signals in the state in which the surface to be measured is shifted in the X and Y directions. Light intensities of each signal before and after shifting the surface to be measured are compared, and one of these signals can be selected as a signal corresponding to reflected light (first reflected light) having a wavelength at which the focus position coincides with the position of the surface to be measured. Since a signal corresponding to the first reflected light can be accurately selected from a plurality of signals, the shape of the surface to be measured can be measured at high accuracy. The first embodiment has been explained using a chromatic confocal measurement apparatus. However, the present invention is not limited to this, and the present invention is also applicable to, for example, a confocal measurement apparatus. In the first embodiment, the pinhole is used to perform spot illumination of a surface to be measured. However, when performing linear illumination of a surface to be measured, a slit may be used in place of the pinhole.

<Second Embodiment>

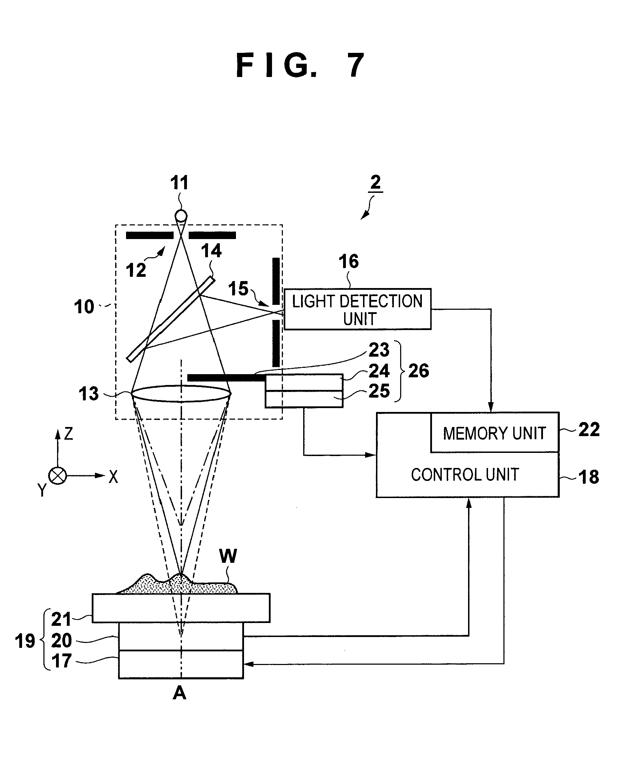

A measurement apparatus 2 according to the second embodiment of the present invention will be explained with reference to Fig. 7. Fig. 7 is a view showing the measurement apparatus 2 according to the second embodiment. Unlike the measurement apparatus 1 according to the first embodiment, the measurement apparatus 2 according to the second embodiment further includes a light-shielding unit 26 and uses the light-shielding unit 26 as a changing unit. When an output from a light detection unit 16 contains a plurality of signals, the light-shielding unit 26 blocks part of reflected light to change the state of a confocal optical system 10 and change the distribution of light irradiating a surface to be measured from the confocal optical system 10. Based on the change ratio (change amount) of the light intensity of each signal upon change, one of these signals is selected.

The light-shielding unit 26 can include a light-shielding plate 23, light-shielding plate position detection unit 24, and light-shielding plate driving unit 25. The light-shielding plate 23 is arranged off the optical axis A of the confocal optical system along a path (to be referred to as an optical path region hereinafter) common to light before being incident on a surface to be measured after the light is emitted by a light source 11, and light before being incident on a photoreceiver (light detection unit 16) after the light is reflected by the surface to be measured. That is, the light-shielding plate 23 is arranged off the optical axis of the confocal optical system asymmetrically about the optical axis. The light-shielding plate position detection unit 24 is constructed by, for example, an encoder and detects the position (X and Y positions) of the light-shielding plate 23. The light-shielding plate driving unit 25 drives the light-shielding plate 23 to arrange the light-shielding plate 23 in the optical path region or retract it from the optical path region. A control unit 18 controls the light-shielding unit 26.

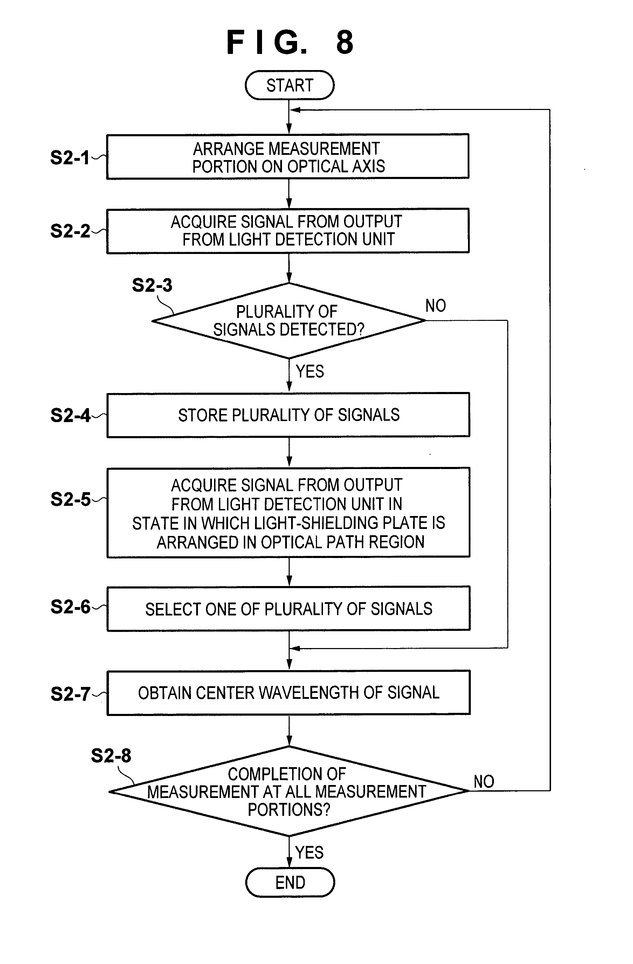

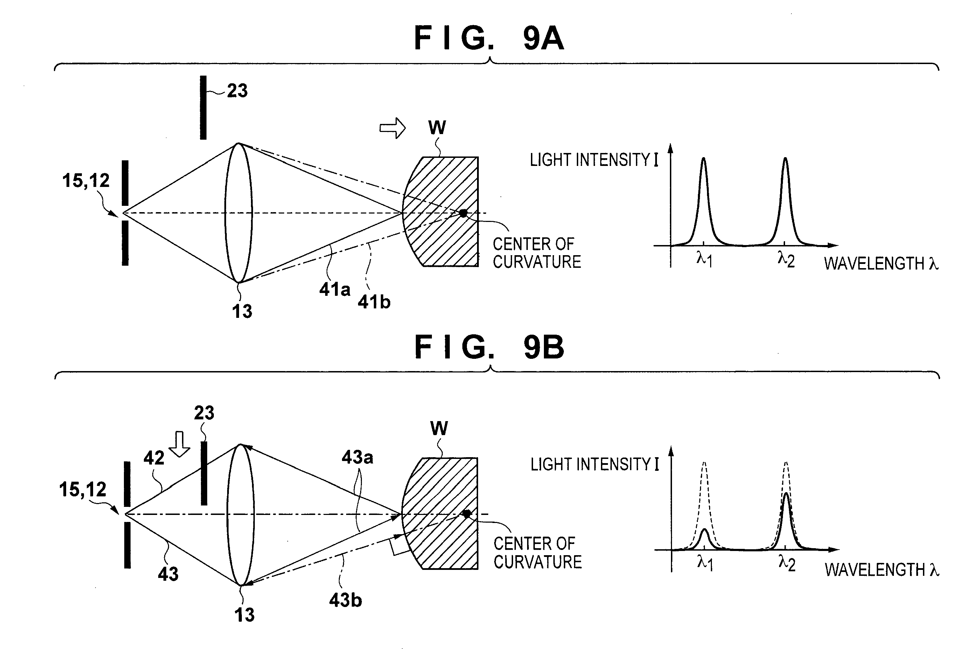

A method of selecting one of a plurality of signals as a signal corresponding to the first reflected light when an output from the light detection unit 16 contains a plurality of signals in the measurement apparatus 2 according to the second embodiment will be explained with reference to Fig. 8. Fig. 8 is a flowchart showing a method of selecting one of a plurality of signals in the measurement apparatus 2 according to the second embodiment. Steps S2-1 to S2-4 are the same as steps S1-1 to S1-4 described with reference to Fig. 4 in the first embodiment, and a description thereof will not be repeated. In step S2-5, the control unit 18 controls the light-shielding plate driving unit 25 to arrange the light-shielding plate 23 in the optical path region. Also, the control unit 18 controls the light detection unit 16 to output the relationship between the wavelength and light intensity of reflected light. Then, the control unit 18 acquires a signal from the output from the light detection unit 16. Each signal contained in an output from the light detection unit 16 that is acquired in the state in which the light-shielding plate 23 is arranged in the optical path region will be called an acquired signal. In step S2-6, the control unit 18 compares the stored signal with the acquired signal and selects, as a signal corresponding to the first reflected light, one of a plurality of signals contained in the output from the light detection unit 16. A method of selecting one of a plurality of signals contained in an output from the light detection unit 16 by using the stored signal and acquired signal will be described with reference to Figs. 9A and 9B.

Figs. 9A and 9B are views showing paths of light before and after arranging the light-shielding plate in the optical path region, and outputs from the light detection unit 16 at those times. Fig. 9A is a view showing a state in which the light-shielding plate 23 is not arranged in the optical path region. Fig. 9B is a view showing a state in which the light-shielding plate 23 is arranged in the optical path region. The left views of Fig. 9A and 9B show the paths of first reflected light 41a (solid line) and second reflected light 41b (broken line). The right views of Fig. 9A and 9B show a plurality of signals detected by the light detection unit 16. In the state (Fig. 9A) in which the light-shielding plate 23 is not arranged in the optical path region, an output from the light detection unit 16 contains two signals having almost the same light intensity at the positions of the wavelengths $\lambda_1$ and $\lambda_2$ (right view of Fig. 9A), similar to 50c of Fig. 5. However, when the output from the light detection unit 16 contains two signals having almost the same light intensity, it is not known which signal is a signal corresponding to the first reflected light 41a. Each signal shown in the right view of Fig. 9A is stored as a stored signal in a memory unit 22 in step S2-4, as described above.

When the light-shielding plate 23 is arranged in the optical path region, as shown in Fig. 9B, the first reflected light 41a traces a path symmetrical about the optical axis A, and most of the first reflected light is shielded by the light-shielding plate 23. For example, considering light 42 emitted from a pinhole 15 (12) in the first direction and light 43 emitted via the pinhole 15 (12) in the second direction, the light 42 emitted in the first direction is shielded by the light-shielding plate 23 before reaching the surface to be measured. The light 43 emitted in the second direction is reflected by the surface to be measured and then is shielded by the light-shielding plate 23, as indicated by arrows 43a. Therefore, the light intensity of the first reflected light 41a detected by the light detection unit 16 greatly attenuates, compared to the stored signal. To the contrary, the second reflected light 41b traces the incoming path, so the amount by which the light-shielding plate 23 shields light becomes smaller, compared to the first reflected light 41a. For example, the light 42 emitted via the pinhole 15 (12) in the first direction is shielded by the light-shielding plate 23 before reaching the surface to be measured. In contrast, the light 43 emitted in the second direction is reflected by the surface to be measured, and then passes through the pinhole 15 along the incoming path, as indicated by an arrow 43b. Thus, the attenuation amount of the light intensity of the second reflected light 41b detected by the light detection unit 16 becomes smaller than that of the first reflected light 41a.

In this fashion, the first reflected light and second reflected light have different change ratios of the light intensity when the light-shielding plate 23 is arranged in the optical path region. The change ratio of the first reflected light is higher than that of the second reflected light. Even when two signals having almost the same light intensity are obtained, as shown in the right view of Fig. 9A, a signal having a higher change ratio of the light intensity when the light-shielding plate 23 is arranged in the optical path region can be selected from these two signals as a signal corresponding to the first reflected light. For example, a signal at the position of the wavelength $\lambda_1$ out of the two signals in the right view of Fig. 9A has a higher change ratio of the light intensity, as shown in the right view of Fig. 9B, so this signal is selected as a signal corresponding to the first reflected light. The signal (signal at the position of the wavelength $\lambda_1$) selected as a signal corresponding to the first reflected light is on the short-wavelength side among the two signals. This reveals that the measurement portion on the surface to be measured has a convex shape (convex spherical shape). The change ratio $\Delta I$ of the light intensity is calculated using equation (2), similar to the measurement apparatus 1 according to the first embodiment.

In step S2-7, the control unit 18 obtains the center wavelength of the signal selected in step S2-6. Since the wavelength and focus position are associated with each other in advance, the position of the measurement portion on the surface to be measured can be determined by obtaining the center wavelength of one signal selected from the plurality of signals. In step S2-8, the control unit 18 determines whether measurement has been performed at all measurement portions on the surface to be measured. If measurement has been performed at all measurement portions, the measurement ends; if measurement has not been performed at all measurement portions, the process returns to step S2-1. If measurement has ended at all measurement portions, the shape of the surface to be measured can be obtained based on the position of each measurement portion.

As described above, in the measurement apparatus 2 according to the second embodiment, when an output from the light detection unit 16 contains a plurality of signals, the light detection unit 16 acquires a plurality of signals in the state in which the light-shielding plate 23 is arranged in the optical path region. Light intensities of each signal before and after arranging the light-shielding plate 23 in the optical path region are compared, and one of these signals can be accurately selected as a signal corresponding to the first reflected light.

<Third Embodiment>

A measurement apparatus 3 according to the third embodiment of the present invention will be explained. The measurement apparatus 3 according to the third embodiment is different from the measurement apparatus 1 according to the first embodiment in a method of selecting, as a signal corresponding to the first reflected light, one of a plurality of signals contained in an output from a light detection unit 16. When an output from the light detection unit 16 contains a plurality of signals upon measuring the first portion on a surface to be measured, the measurement apparatus 3 selects one of these signals obtained at the first portion, based on information (signal) to be used for determining the position of the second portion, different from the first portion, on the surface to be measured. Based on the selected signal, the measurement apparatus 3 determines the position of the first portion on the surface to be measured.

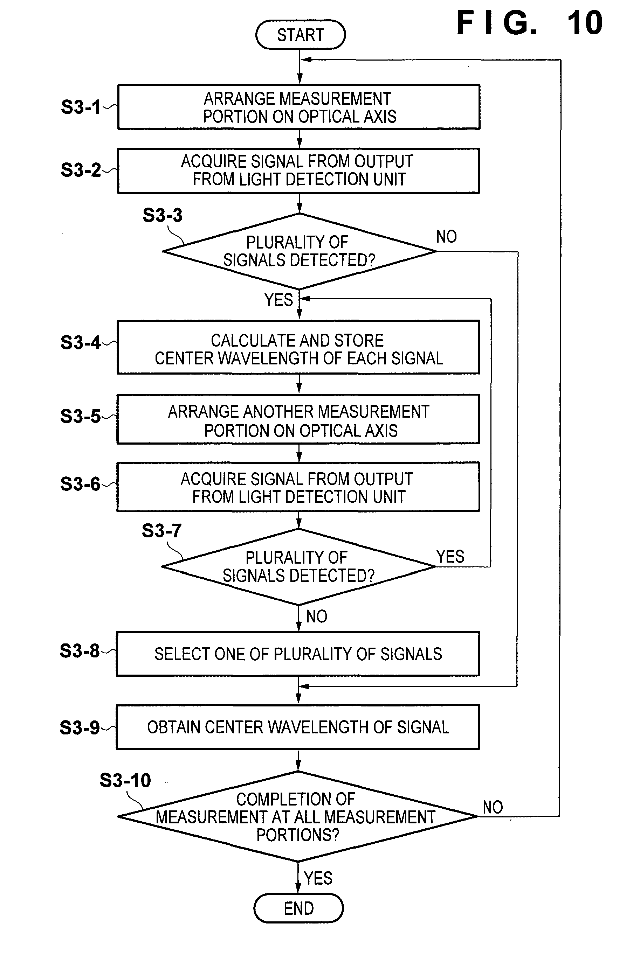

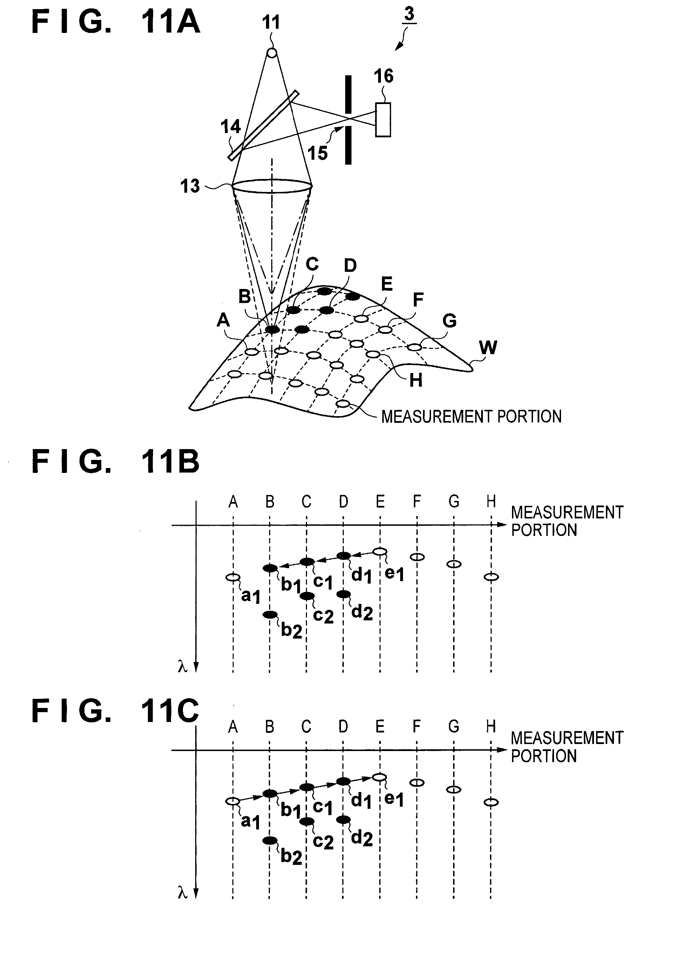

A method of selecting one of a plurality of signals based on information (signal) to be used for determining the position of the second portion when an output from the light detection unit 16 contains a plurality of signals upon measuring the first portion will be explained with reference to Figs. 10, 11A, 11B, and 11C. Fig. 10 is a flowchart showing a method of selecting one of a plurality of signals in the measurement apparatus 3 according to the third embodiment. Figs. 11A to 11C are views for explaining the method of selecting one of a plurality of signals. Fig. 11A is a view showing a state in which each measurement portion on a surface to be measured is measured while changing the relative positions between a confocal optical system 10 and the surface to be measured. In Fig. 11A, filled circles indicate measurement portions at each of which an output from the light detection unit 16 contains a plurality of signals. Open circles indicate measurement portions at each of which an output from the light detection unit 16 contains only one signal. The third embodiment assumes that the surface to be measured is measured in the order of portions A to H while relatively moving the confocal optical system 10 and the surface to be measured. Figs. 11B and 11C are views showing signals contained in outputs from the light detection unit at the respective measurement portions. In Figs. 11B and 11C, the abscissa represents each measurement portion, and the ordinate represents the wavelength of a signal contained in an output from the light detection unit at each measurement portion. For example, only one plot is described at each of the portions A and E to H. This means that the light detection unit 16 has detected only one signal. To the contrary, two plots are described at each of the portions B to D. This means that the light detection unit 16 has detected two signals having different wavelengths.

In step S3-1, a control unit 18 controls the position of a stage 21 so that a measurement portion on a surface to be measured is arranged on the optical axis A. In step S3-2, the control unit 18 controls the light detection unit 16 to output a light intensity of reflected light in correspondence with a wavelength at the measurement portion arranged on the optical axis A in step S3-1, and acquires a signal from the output from the light detection unit 16. In step S3-3, the control unit 18 determines whether the output from the light detection unit 16 contains a plurality of signals. If the output from the light detection unit 16 contains a plurality of signals, the process advances to step S3-4; if the output does not contain a plurality of signals (contains one signal), to step S3-9. In step S3-4, the control unit 18 calculates the center wavelength of each signal and stores the calculated center wavelength of each signal in a memory unit 22. In step S3-5, the control unit 18 controls the position of the stage 21 so that another measurement portion is arranged on the optical axis A. In step S3-6, the control unit 18 controls the light detection unit 16 to output a light intensity of reflected light in correspondence with a wavelength at the measurement portion arranged on the optical axis A in step S3-5. In step S3-7, the control unit 18 determines whether the output from the light detection unit 16 contains a plurality of signals. If the output from the light detection unit 16 contains a plurality of signals, the process returns to step S3-4 to repeat steps S3-4 to S3-7 till a measurement portion at which the output contains only one signal. If the output from the light detection unit 16 does not contain a plurality of signals (contains one signal), the process advances to step S3-8. In step S3-8, the control unit 18 assumes that the surface to be measured has continuity. At a measurement portion at which an output from the light detection unit 16 contains a plurality of signals, the control unit 18 selects one of these signals based on a signal at a measurement portion different from this measurement portion. For example, assume that measurement has ended up to the portion E, and an output from the light detection unit 16 contains only one signal $e_1$ at the portion E in Fig. 11B. At this time, the control unit 18 refers to the portion D serving as an immediately preceding measurement portion in time series. At the portion D, an output from the light detection unit 16 contains two signals $d_1$ and $d_2$. Thus, the control unit 18 selects, from these two signals as a signal corresponding to the first reflected light, the signal $d_1$ having a wavelength close to that of a signal $e_1$ at the portion E. Similarly, the control unit 18 selects, from two signals $c_1$ and $c_2$ at the portion C, the signal $c_1$ having a wavelength close to that of the signal $d_1$ selected at the portion D. Also, the control unit 18 selects, from two signals $b_1$ and $b_2$ at the portion B, the signal $b_1$ having a wavelength close to that of the signal $c_1$ selected at the portion C. In this manner, at a measurement portion at which an output from the light detection unit 16 contains a plurality of signals, one of these signals is selected based on a signal at an immediately succeeding measurement portion in time series. In step S3-9, the control unit 18 obtains the center wavelength of the signal acquired as information to be used for determining the position of each measurement portion. Since the wavelength and focus position are associated with each other in advance, the position of the measurement portion can be determined by obtaining the center wavelength of a signal detected at each measurement portion. In step S3-10, the control unit 18 determines whether measurement has been performed at all measurement portions on the surface to be measured. If measurement has been performed at all measurement portions, the measurement ends; if measurement has not been performed at all measurement portions, the process returns to step S3-1. If measurement has ended at all measurement portions, the shape of the surface to be measured can be obtained based on the position of each measurement portion.

As described above, in the measurement apparatus 3 according to the third embodiment, when an output from the light detection unit 16 at the first portion contains a plurality of signals, one of these signals can be selected based on information (signal) to be used for determining the position of the second portion different from the first portion. When an output from the light detection unit 16 contains a plurality of signals, the measurement apparatus 3 according to the third embodiment selects one of these signals based on an immediately succeeding signal in time series. However, the present invention is not limited to this. For example, when an output from the light detection unit 16 contains a plurality of signals, one of these signals may be selected based on an immediately preceding signal in time series, as shown in Fig. 11C. For example, in Fig. 11C, the control unit 18 selects, from two signals $b_1$ and $b_2$ at the portion B, the signal $b_1$ having a wavelength close to that of the signal $a_1$ at the portion A. Similarly, the control unit 18 selects, from two signals $c_1$ and $c_2$ at the portion C, the signal $c_1$ having a wavelength close to that of the signal $b_1$ selected at the portion B. Also, the control unit 18 selects, from two signals $d_1$ and $d_2$ at the portion D, the signal $d_1$ having a wavelength close to that of the signal $c_1$ selected at the portion C. Alternatively, one of a plurality of signals may be selected based on pieces of information (signals) to be used when determining the positions of a plurality of portions different from the first portion.

<Embodiment of Method of Manufacturing Article>

A method of manufacturing an article in an embodiment of the present invention is used to manufacture an article such as a metal part or optical element. The method of manufacturing an article according to the embodiment includes a step of measuring the surface shape of an object to be measured by using the above-described measurement apparatus, and a step of processing the object based on the measurement result in the preceding step. For example, the surface shape of an object to be measured is measured using the measurement apparatus, and the object is processed (manufactured) based on the measurement result so that the shape of the object has a design value. The method of manufacturing an article according to the embodiment is superior to a conventional method in at least one of the performance, quality, productivity, and production cost of an article because the measurement apparatus can measure the shape of an object to be measured at high accuracy.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A measurement apparatus which measures a position of a surface to be measured, comprising:

   a light detection unit (16) configured to detect light reflected by the surface to be measured;
   a confocal optical system (10) configured to irradiate the surface to be measured with light and guide the light traveling from the surface to be measured to the light detection unit; and
   a control unit (18) configured to determine a position of the surface to be measured, based on an output from the light detection unit,
   wherein the control unit obtains a plurality of signals to be used for determining the position of the surface to be measured from a detection result of detecting, by the light detection unit, light reflected by the one surface to be measured, selects one of the plurality of signals, and obtains the position of the surface to be measured, based on the selected signal.

2. The apparatus according to claim 1, wherein the control unit changes relative positions between the confocal optical system and the surface to be measured in a direction different from an optical axis direction of the confocal optical system, controls the light detection unit to detect light traveling from the surface to be measured, and selects one of the plurality of signals based on a change amount of the signal upon the change.

3. The apparatus according to claim 2, further comprising a stage (19) configured to be movable while holding the surface to be measured,
   wherein the control unit changes the relative positions between the confocal optical system and the surface to be measured by driving the stage.

4. The apparatus according to claims 2 or 3, wherein the control unit selects, from the plurality of signals, a signal having a relatively small change amount upon changing the relative positions.

5. The apparatus according to claim 1, wherein
the confocal optical system includes a light-shielding plate configured to block light, and
the control unit selects one of the plurality of signals based on a change amount of the signal between a case in which the light-shielding plate is arranged off an optical axis of the confocal optical system asymmetrically about the optical axis, and a case in which the light-shielding plate is not arranged.

6. The apparatus according to claim 5, wherein the control unit selects one of the plurality of signals based on a change amount of the signal between a case in which the light-shielding plate (23) is arranged in a path common to light incident on the surface to be measured after the light is emitted from a light source, and light incident on the light detection unit after the light is reflected by the surface to be measured, and a case in which the light-shielding plate is not arranged.

7. The apparatus according to claim 5, wherein the control unit selects, from the plurality of signals, a signal having a relatively large change amount upon changing arrangement of the light-shielding plate.

8. The apparatus according to any one of claims 1 to 7, wherein
light irradiating the surface to be measured from the confocal optical system contains a plurality of wavelengths, and
the confocal optical system has axial chromatic aberration in an optical axis direction.

9. The apparatus according to claim 8, wherein the light detection unit includes a spectrometer configured to disperse light and a photoreceiver, receives light from the spectrometer by the photoreceiver, and outputs a relationship between a wavelength and light intensity of the dispersed light.

10. The apparatus according to claim 1, wherein when the plurality of signals are obtained upon measuring a position of a first portion on the surface to be measured, the control unit selects one of the plurality of signals based on information to be used for determining a position of a second portion, different from the first portion, on the surface to be measured, and determines the position of the first portion based on the selected signal.

11. The apparatus according to claim 1, wherein
the light detection unit outputs a detection result of detecting, of light reflected by the surface to be measured, first light incident on the confocal optical system through the same optical path as an optical path through which the light is incident on the surface to be measured from the confocal optical system, and second light incident on the confocal optical system through an optical path on a side opposite via the optical axis of the confocal optical system to the optical path through which the light is incident on the surface to be measured from the confocal optical system, and
the control unit selects one of a signal of the first light and a signal of the second light based on the detection result, and obtains the position of the surface to be measured, based on the selected signal.

12. The apparatus according to any one of claims 1 to 11, wherein the measurement apparatus measures a shape of the surface to be measured which is a curved surface.

13. The apparatus according to any one of claims 1 to 12, wherein the signals include a signal of peaks of light intensities detected by the light detection unit.

14. The apparatus according to any one of claims 1 to 13, wherein the surface to be measured is the front surface of an object to be measured on a side on which the light is incident on the object to be measured from the confocal optical system.

15. The apparatus according to claim 1, wherein the measurement apparatus measures a shape of the surface to be measured, and
wherein the control unit is adapted to obtain a plurality of signals to be used for determining the position of the surface to be measured, based on an output from the light detection unit, to select one of the plurality of signals based on a change of the signal upon changing a distribution of light irradiating the surface to be measured from the confocal optical system, or upon changing relative positions between the confocal optical system and the surface to be measured in a direction different from an optical axis direction of the confocal optical system, and to determine the position of the surface to be measured, based on the selected signal.

**16.** A method of manufacturing an article, comprising steps of:

measuring a surface shape of an object to be measured using the measurement apparatus according to any one of claims 1 to 15; and
processing the object to be measured, based on a measurement result in the step of measuring.

# FIG. 1

# FIG. 2

# FIG. 3A

W
15,12
13
31a
31b
CENTER OF CURVATURE

LIGHT INTENSITY I
FITTING FUNCTION
32a
32b
$\lambda_1$
$\lambda_2$
WAVELENGTH $\lambda$

# FIG. 3B

CENTER OF CURVATURE
W
15,12
13
31a
31b

LIGHT INTENSITY I
FITTING FUNCTION
32b
32a
$\lambda_1$
$\lambda_2$
WAVELENGTH $\lambda$

EP 2 762 828 A1

# F I G. 4

START

S1-1 — ARRANGE MEASUREMENT
PORTION ON OPTICAL AXIS

S1-2 — ACQUIRE SIGNAL FROM OUTPUT
FROM LIGHT DETECTION UNIT

S1-3 — PLURALITY OF
SIGNALS DETECTED?

NO

YES

S1-4 — STORE PLURALITY OF SIGNALS

S1-5 — ACQUIRE SIGNAL FROM OUTPUT
FROM LIGHT DETECTION UNIT IN STATE
IN WHICH SURFACE TO BE MEASURED IS
SHIFTED IN X AND Y DIRECTIONS

S1-6 — SELECT ONE OF PLURALITY OF SIGNALS

S1-7 — OBTAIN CENTER WAVELENGTH OF SIGNAL

S1-8 — COMPLETION OF
MEASUREMENT AT ALL MEASUREMENT
PORTIONS?

NO

YES

END

# FIG. 5

EP 2 762 828 A1

# FIG. 6

EP 2 762 828 A1

# FIG. 7

# FIG. 8

START

S2-1 — ARRANGE MEASUREMENT PORTION ON OPTICAL AXIS

S2-2 — ACQUIRE SIGNAL FROM OUTPUT FROM LIGHT DETECTION UNIT

S2-3 — PLURALITY OF SIGNALS DETECTED? — NO

YES

S2-4 — STORE PLURALITY OF SIGNALS

S2-5 — ACQUIRE SIGNAL FROM OUTPUT FROM LIGHT DETECTION UNIT IN STATE IN WHICH LIGHT-SHIELDING PLATE IS ARRANGED IN OPTICAL PATH REGION

S2-6 — SELECT ONE OF PLURALITY OF SIGNALS

S2-7 — OBTAIN CENTER WAVELENGTH OF SIGNAL

S2-8 — COMPLETION OF MEASUREMENT AT ALL MEASUREMENT PORTIONS? — NO

YES

END

# FIG. 9A

23

W

15,12

13

41a  41b

CENTER OF
CURVATURE

LIGHT INTENSITY I

$\lambda_1$        $\lambda_2$        WAVELENGTH $\lambda$

# FIG. 9B

23

42

W

15,12

43

13

43a

43b

CENTER OF
CURVATURE

LIGHT INTENSITY I

$\lambda_1$        $\lambda_2$        WAVELENGTH $\lambda$

EP 2 762 828 A1

# F I G. 10

START

S3-1 — ARRANGE MEASUREMENT
PORTION ON OPTICAL AXIS

S3-2 — ACQUIRE SIGNAL FROM OUTPUT
FROM LIGHT DETECTION UNIT

S3-3 — PLURALITY OF
SIGNALS DETECTED? — NO

YES

S3-4 — CALCULATE AND STORE
CENTER WAVELENGTH OF EACH SIGNAL

S3-5 — ARRANGE ANOTHER MEASUREMENT
PORTION ON OPTICAL AXIS

S3-6 — ACQUIRE SIGNAL FROM OUTPUT
FROM LIGHT DETECTION UNIT

S3-7 — PLURALITY OF
SIGNALS DETECTED? — YES

NO

S3-8 — SELECT ONE OF PLURALITY OF SIGNALS

S3-9 — OBTAIN CENTER WAVELENGTH OF SIGNAL

S3-10 — COMPLETION OF
MEASUREMENT AT ALL MEASUREMENT
PORTIONS? — NO

YES

END

# FIG. 11A

MEASUREMENT PORTION

# FIG. 11B

# FIG. 11C

Europäisches
Patentamt

European
Patent Office

Office européen
des brevets

# EUROPEAN SEARCH REPORT

Application Number

EP 14 00 0402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/128264 A1 (HOENICKA REINHOLD [DE] ET AL) 27 May 2010 (2010-05-27) * paragraphs [0032] - [0044], figures 1-3 * ----- | 1-16 | INV. G01B11/06 |
| X | EP 2 060 869 A1 (MITUTOYO CORP [JP]) 20 May 2009 (2009-05-20) * paragraphs [0001] - [0080], figures 1-9 * ----- | 1-16 | |

TECHNICAL FIELDS
SEARCHED       (IPC)

G01B

The present search report has been drawn up for all claims

| Place of search | Date of completion of the search | Examiner |
|---|---|---|
| Munich | 20 May 2014 | Malcoci, Andrei |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 00 0402

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2014

| Patent document cited in search report | Publication date | Patent family member(s) | | Publication date |
|---|---|---|---|---|
| US 2010128264 A1 | 27-05-2010 | CN | 101548151 A | 30-09-2009 |
| | | DE | 102008024598 A1 | 18-12-2008 |
| | | EP | 2149028 A1 | 03-02-2010 |
| | | US | 2010128264 A1 | 27-05-2010 |
| | | WO | 2008141640 A1 | 27-11-2008 |
| EP 2060869 A1 | 20-05-2009 | CN | 101435719 A | 20-05-2009 |
| | | EP | 2060869 A1 | 20-05-2009 |
| | | JP | 5190330 B2 | 24-04-2013 |
| | | JP | 2009122105 A | 04-06-2009 |
| | | US | 2010283989 A1 | 11-11-2010 |

EPO FORM P0459

For more details about this annex : see Official Journal of the European Patent Office, No. 12/82

**EP 2 762 828 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3509088 B
- JP 2009122105 A